(19) Europäisches Patentamt
European Patent Office
Office européen des brevets

(11) **EP 3 954 743 A1**

(12) **EUROPÄISCHE PATENTANMELDUNG**

(43) Veröffentlichungstag:
**16.02.2022  Patentblatt 2022/07**

(21) Anmeldenummer: **20190611.2**

(22) Anmeldetag: **12.08.2020**

(51) Internationale Patentklassifikation (IPC):
**C09D 5/08** *(2006.01)*     **C09D 5/10** *(2006.01)*
**C09D 163/00** *(2006.01)*

(52) Gemeinsame Patentklassifikation (CPC):
**C09D 7/62; C09D 5/10; C09D 163/00; C08K 3/36;
C08K 9/06**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Evonik Operations GmbH
45128 Essen (DE)**

(72) Erfinder:
  • **HALLACK, Markus
    46514 Schermbeck (DE)**

• **DE GANS, Berend-Jan
  45478 Mülheim an der Ruhr (DE)**
• **DÜLLMANN, Florian
  58099 Hagen (DE)**
• **HERRWERTH, Sascha
  63579 Freigericht (DE)**

(74) Vertreter: **Evonik Patent Association
c/o Evonik Industries AG
IP Management
Bau 1042A/PB 15
Paul-Baumann-Straße 1
45772 Marl (DE)**

(54) **VERWENDUNG VON SILIZIUMDIOXID ZUR VERBESSERUNG DER LEITFÄHIGKEIT VON BESCHICHTUNGEN**

(57)    Die Erfindung betrifft die Verwendung Silizium-dioxid zur Erhöhung der ionischen Leitfähigkeit von ausgehärteten Beschichtungen auf Basis von epoxyfunktionellen Polymeren als Bindemittel, wobei die Verwendung den kathodischen Korrosionsschutz von Funktionsbeschichtungen auf Basis von epoxyfunktionellen Polymeren und von mindestens einem Metallteilchen verbes-sert.

Fig. 1

EP 3 954 743 A1

**Beschreibung**

Die Erfindung betrifft die Verwendung von Siliziumdioxid zur Verbesserung der Leitfähigkeit von ausgehärteten Beschichtungen auf Basis von epoxyfunktionellen Polymeren als Bindemitteln.

Um Metalloberflächen bzw. -substrate, wie zum Beispiel Eisen und Stahl, vor Korrosion zu schützen, werden diese mit einer Funktionsbeschichtung behandelt, die der Fachwelt gut bekannt ist. Diese Funktionsbeschichtung, auch Primerlackierung oder auch kurz Primer genannt, wird unmittelbar auf ein Metallsubstrat aufgebracht, um in einem Beschichtungssystem eine bestimmte Funktion als Grundierung, insbesondere zur Haftvermittlung und zum Korrosionsschutz, zu übernehmen. Sie enthält im allgemeinen Metallteilchen, insbesondere Zink- und/oder Aluminiumteilchen als sogenanntes Opfermetall. Üblicherweise wird auf die Grundierungsbeschichtung weitere Lackschichten aufgebracht, um Metalloberflächen bzw. -substrate noch wirksamer vor Korrosion zu schützen.

Die Funktionsbeschichtung kann sowohl als Grundierungsbeschichtung, Primerlackierung als auch als einzige Korrosionsschutzbeschichtung auf hochfeste Metallschrauben, Muttern, Federn, Bleche und/oder andere Konstruktionsteile eingesetzt werden. Solche Korrosionsschutzbeschichtungen werden auch als Zinklamellenüberzug bezeichnet.

Metallteilchen, -partikeln oder -pigmente entsprechend deren konkreten Metalls werden als Synonyme verstanden.

Grundierungsbeschichtung, Grundierung, Primer und Primerlackierung werden als Synonyme verstanden.

Der antikorrosive Effekt der Grundierungs- bzw. Funktionsbeschichtung ist auf die kathodische Schutzwirkung des Metallpigments zurückzuführen. Besonders bewährt haben sich zinkhaltige Grundierungsbeschichtungen, die insbesondere zum Schutz von Maschinen und Stahlkonstruktionen, im Automobilbereich, im Bereich Brückenbau und Schiffsbau eingesetzt werden. Durch den elektrischen Kontakt zwischen den Zinkpartikeln untereinander und dem Substrat, wird eben dieses kathodisch geschützt. Das Substrat fungiert als Kathode, während sich die Zinkpartikel anodisch oxidiert werden und sich auflösen. Absorbiertes Wasser unterstützt dabei den Abtransport von Zink-Ionen durch die Grundierungsbeschichtung. Durch Reaktion mit Sauerstoff oder Kohlendioxid können sich letztendlich wasserunlösliche Zinksalze bilden, die kleine Fehlstellen im Lackschicht schließen können.

Als Bindemittel für Grundierungsbeschichtungen werden üblicherweise Epoxidharzen aufgrund ihrer guten Barrierewirkung, ihrer guten Substrathaftung sowie ihrer guten mechanischen Eigenschaften verwendet.

Um die Sedimentation der Metallpartikel entgegen zu wirken und die Lagerstabilität der Grundierungsbeschichtungen zu verbessern, werden oftmals geringe Mengen an Thixotropierungsadditiven zugegeben. Bekannte Thixotropierungsadditive sind organisch modifizierte Tonerden und pyrogene Kieselsäuren.

Aus dem Stand der Technik sind öffentlich geförderte Projekte bekannt, um die Wirksamkeitsbeschränkungen von Zinkprimern zu beseitigen. Hierbei werden verschiedene Ansätze geprüft:

- Modifizierung der Partikelgrößenverteilung und Partikelform der Zinkpigmente,
- Einsatz von Zinklegierungspigmenten oder
- Zusatz von zinkfreien korrosionsinhibierenden Pigmenten oder
- Zusatz von Graphen.

Alle dieser Ansätze sind zeitaufwändig und kostenintensiv.

Es ist daher wünschenswert, Substanzen zu identifizieren, die den kathodischen Korrosionsschutz von Funktionsbeschichtungen verbessern.

Da die Korrosionsschutzwirksamkeit des Metalls im Wesentlich auf dessen elektrischem Kontakt zum Substrat basiert, soll für einen guten Korrosionsschutz die Leitfähigkeit in der Beschichtung verbessert werden. Letztlich erfordern korrosive Vorgänge die Beweglichkeit bzw. den Austausch von Ladungsträgern, d.h. konkret von Ionen und Elektronen. Elektronen können dabei im Metall bewegt werden, Ionen in ionenleitenden Phasen. Dies bedeutet gleichzeitig, dass sich das korrodierende Metall in einem Elektrolyten, zum Beispiel Wasser als ionenleitende Flüssigkeit, befinden muss.

Überraschend wurde nun gefunden, dass die Verwendung von Siliziumdioxid zur Verbesserung der ionischen Leitfähigkeit von ausgehärteten Beschichtungen auf Basis von epoxyfunktionellen Polymeren als Bindemittel sich eignet.

Es hat sich zudem herausgestellt, dass durch die Verwendung von Siliziumdioxid die ausgehärtete Beschichtung eine erhöhte Wasseraufnahme aufweist als vergleichbare Beschichtungen ohne Siliziumdioxid. Es wird vermutet, dass die erhöhte ionische Leitfähigkeit auf die erhöhte Wasseraufnahme zurückzuführen ist.

Aufgrund der erhöhten ionischen Leitfähigkeit konnte wiederum festgestellt werden, dass der kathodische Korrosionsschutz von metallteilchenhaltigen Funktionsbeschichtungen verbessert wird.

Vorzugsweise handelt es sich bei dem Siliziumdioxid um pyrogenes Siliziumdioxid.

Bevorzugt werden diese aus hydrophilen, hydrophoben und/oder teilhydrophoben, pyrogenen Siliziumdioxiden ausgewählt.

Der Begriff "hydrophil" im Sinne der vorliegenden Erfindung bezieht sich auf die Partikel, die mit reinem Wasser vollständig benetzt werden können. Hydrophobe Partikel können nicht durch reines Wasser benetzt werden; sie besitzen daher wasserabweisende Eigenschaften. Eine solche Hydrophobizität kann üblicherweise durch die Aufbringung entsprechender unpolarer Gruppen an die Kieselsäureoberfläche erreicht werden. Das Ausmaß der Hydrophobizität einer Kieselsäure kann unter anderem durch ihre Methanolbenetzbarkeit nach Corning Glass bestimmt werden, wie beispielsweise in WO2011/076518 A1, Seiten 5 - 6, näher beschrieben. In reinem Wasser trennt sich eine vollständig hydrophobierte Kieselsäure von der wässrigen Phase ab und schwimmt auf dessen Oberfläche, ohne benetzt zu werden. In reinem Methanol dagegen kann eine hydrophobe Kieselsäure durch Schütteln bzw. starkes Rühren benetzt werden und so homogen im Lösungsmittelvolumen verteilt werden. Bei der Messung der Methanolbenetzbarkeit wird der maximale Gehalt an Methanol in einem Methanol-Wasser Testgemisch bestimmt, bei dem gerade noch keine Benetzung der Kieselsäure stattfindet, also idealer Weise 100% der eingesetzten Kieselsäure sich nach dem Kontakt mit dem Testgemisch unbenetzt bleibt und separiert. Dieser Gehalt an Methanol in dem Methanol-Wasser Gemisch in Vol. % wird Methanolbenetzbarkeit genannt. Je höher eine solche Methanolbenetzbarkeit ist, desto hydrophober ist die Kieselsäure. Je niedriger die Methanolbenetzbarkeit, desto geringer ist die Hydrophobie.

Das erfindungsgemäße hydrophile Siliziumdioxid weist vorzugsweise eine Methanolbenetzbarkeit von 0 Vol.-% Methanol in einem Methanol-Wasser Gemisch auf. Die Kieselsäure, wird also von reinem Wasser vollständig benetzt.

Das erfindungsgemäße hydrophobe Siliziumdioxid weist vorzugsweise eine Methanolbenetzbarkeit von > 0 Vol.-% Methanol in einem Methanol-Wasser Gemisch auf, bevorzugt liegt sie zwischen 5 - 90 Vol.-% Methanol in einem Methanol-Wasser Gemisch, besonders bevorzugt zwischen 20 - 75 Vol.-% Methanol in einem Methanol-Wasser Gemisch.

Kieselsäure und Siliziumdioxid sind als Synonyme zu verwenden.

Es war des Weiteren überraschend, dass sowohl die hydrophilen als auch die hydrophoben Siliziumdioxiden enthaltenen auf epoxyfunktionellen Polymerenbasierten Beschichtungen eine erhöhte Wasseraufnahme und eine erhöhte Leitfähigkeit Vergleich zu einer Beschichtung ohne Siliziumdioxid aufweisen.

Vorzugsweise wird das Siliziumdioxid in Pulverform eingesetzt. Generell ist natürlich auch Siliziumdioxid in dispergierter Form geeignet.

Strukturmodifizierte AEROSIL®-Typen (wie zum Beispiel das AEROSIL® R 9200), erhältlich von der Fa. Evonik, wurden vor mehr als 10 Jahren eingeführt, um die Kratzfestigkeit und mechanische Beständigkeit von Produkten der Beschichtungs- und Klebstoff-/Dichtstoff-Industrie zu verbessern.

Es ist vorstellbar, dass generell alle strukturmodifizierte Siliziumdioxidtypen für die erfindungsgemäße Verwendung geeignet sind.

Vorzugsweise weisen die Siliziumdioxidpartikeln eine Oberflächenmodifizierung mit Silanen ausgewählt aus Dimethyldichlorsilan, Trimethylmonochlorsilan, Methyltrichlorsilan, Propyltrichlorsilan, Trimethoxypropylsilan, Triethoxypropylsilan, Trimethoxy-i-Butylsilan, Triethoxy-i-Butylsilan, Trimethoxyoctylsilan, Triethoxyoctylsilan, Trimethoxyhexadecylsilan, Octyltriethoxysilan und Triethoxyhexadecylsilan, Silazanen ausgewählt aus 1,1,1-Trimethyl-N-trimethylsilyl-silanamin und N-Methyl-aza-2,2,4-trimethylsilacyclopentane oder Siloxanen ausgewählt aus Octamethyltetracyclosiloxan, Decamethylpentacyclosiloxan, Dodecamethylhexacyclosiloxan, Polydimethylsiloxan, Methoxy- und Hydroxyterminiertem Polydimethylsiloxan, oder Kombinationen daraus, auf. Derartige oberflächenmodifizierten Siliziumdioxidpartikel sind beispielsweise unter der Bezeichnung Aerosil® (Fa. Evonik), Cabo-sil® (Fa. Cabot) oder HDK (Fa. Wacker) erhältlich.

Vorzugsweise weisen die Siliziumdioxidpartikeln eine nummerische mittlere Primärpartikelgröße zwischen 2 -100 nm, bevorzugt 5 - 50 nm auf. Eine nummerische mittlere Partikelgröße kann mittels Elektronenmikroskopie bestimmt werden.

Vorzugsweise weisen die Siliziumdioxidpartikeln eine BET-Oberfläche von 20 - 1000 $m^2/g$, bevorzugt 50 - 500 $m^2/g$ auf. Die spezifische Oberfläche, auch vereinfacht BET Oberfläche genannt, wird nach DIN 9277:2014 durch Stickstoffadsorption nach dem Brunauer-Emmett-Teller-Verfahren bestimmt.

Das für erfindungsgemäße Verwendung eingesetzte Siliziumdioxid kann eine Stampfdichte von bis zu 400 g/L, bevorzugt von 10 bis 100 g/L, besonders bevorzugt von 20 bis 80 g/L, ganz besonders bevorzugt 30 bis 70 g/L aufweisen. Stampfdichten verschiedener pulverförmiger oder grobkörniger granulärer Materialien können nach DIN ISO 787-11:1995 "Allgemeine Prüfverfahren für Pigmente und Füllstoffe - Teil 11: Bestimmung des Stampfvolumens und der Stampfdichte" bestimmt werden. Dabei wird die Fülldichte einer Schüttung nach dem Rütteln und Stampfen gemessen.

Bevorzugt wird das Siliziumdioxid in einer Menge von 0,01 - 15 Gew.-%, bevorzugt 0,05 - 5 Gew.-%, besonders bevorzugt 0,1 - 3 Gew.-% bezogen auf die Gesamtmenge der Funktionsbeschichtung verwendet.

Bevorzugte Metallteilchen sind ausgewählt aus Zink, Magnesium, Aluminium, Chromium, Silizium oder Mangan, deren Legierungen oder Mischungen davon.

Vorzugsweise handelt es sich bei der Funktionsbeschichtung um einer Grundierungsbeschichtung, vorzugsweise um einen Zinkprimer.

Bevorzugt enthält der Zinkprimer Zinkstaub oder Zinkflakes.

Des Weiteren weisen der Zinkprimer als auch die Grundierungsbeschichtung vorzugsweise ein Bindemittelsystem auf Basis von einem Epoxidharz auf, ausgewählt aus Bisphenol A Diglycidylether und dessen Oligomeren, teilweise oder vollständig hydrogeniertem Bisphenol A Diglycidylether und dessen Oligomeren, bromiertem Bisphenol A Diglycidylether und dessen Oligomeren, Bisphenol F Diglycidylether und dessen Oligomeren, teilweise oder vollständig hydrogeniertem Bisphenol F Diglycidylether und dessen Oligomeren, Bisphenol S Diglycidylether und dessen Oligomeren, Novolac basierten Epoxidharzen wie beispielsweise Epoxy Phenol Novolac (EPN) oder Epoxy Cresol Novolac (ECN), hydrogenierten Novolac basierten Epoxidharzen, Kondensate von einer von den vorher genannten Epoxidharzen mit Silikonharzen, oder Gemische daraus. Derartige Epoxidharze sind beispielsweise unter der Bezeichnung Epikote und Eponex (Fa. Hexion), Araldite (Fa. Huntsman), Silikopon (Fa. Evonik) oder D.E.R. (Fa. Dow Chemical) erhältlich.

Bevorzugt enthält der Zinkprimer Bisphenol A Diglycidylether oder dessen Oligomere.

Darüber hinaus kann die Grundierungsbeschichtung oder der Zinkprimer einen Härter aufweisen. Grundsätzlich kommen alle Härter in Frage, die das epoxyfunktionelle Polymer aushärten können.

Vorzugsweise sind die Härter ausgewählt aus der Gruppe der Säureanhydriden, aus der Gruppe der (Poly)Thiolen, der Aminosilanen, der (Poly)Isocyanaten, der aliphatischen, cycloaliphatischen und aromatischen Aminen, Mannichbase Derivaten eines aliphatischen, cycloaliphatischen oder aromatischen Amins, Phenalkaminen, Polyamide oder Amidoamine auf Basis eines aliphatischen, cycloaliphatischen oder aromatischen Amins, und Poly(alkylene Oxide) Diaminen oder Triaminen. Derartige Härter sind beispielsweise unter der Bezeichnung Ancamine und Ancamide (Fa. Evonik), Aradur und Jeffamine (Fa. Huntsman), Epikure (Fa. Hexion) oder D.E.H. (Fa. Dow Chemical) erhältlich.

Darüber hinaus kann die Funktionsbeschichtung oder der Zinkprimer weitere Zusatzstoffe enthalten, ausgewählt aus Reaktivverdünner wie beispielsweise Monoglycidylether, organischen Lösemitteln wie beispielsweise Xylol, Katalysatoren oder Beschleuniger wie beispielsweise ternären Aminen, Entschäumer, Verlaufshilfsmittel und Füllstoffe wie beispielsweise Talkum oder Quarzmehl.

Die folgenden Beispiele dienen dem Fachmann allein zur Erläuterung dieser Erfindung und stellen keinerlei Beschränkung der beanspruchten Verwendung dar.

## Methoden

### Impedanzmessungen

Impedanzmessungen wurden mit einem IM6 elektrochemisches Messsystem in Kombination mit der AMZ60 Messzelle und der Thales XT Version 5.3.0 Software der Firma ZAHNER-Elektrik, angelehnt an DIN EN ISO 16773-1 bis -4 "Elektrochemische Impedanzspektroskopie (EIS) an beschichteten und unbeschichteten Proben" durchgeführt. Die Messzelle enthält einen Zylinder aus Plexiglas (⌀ 33,8 mm), gefüllt mit 3 Gew.-% NaCl-Lösung. Es wurde eine 3-Elektrodenkonfiguration benutzt, mit einem rostfreien Stahlstab als Gegenelektrode und einer MF-2052 RE-5B Ag/AgCl/3M NaCl Referenzelektrode der Firma BASi. Das Impedanzspektrum wurde mit einer Amplitude von 10 mV im Frequenzbereich 1 Hz - 100 kHz gemessen, und zwar nach einer halben Stunde, nach 2, 6, 14 und 28 Tagen. Während der Messung befand sich die Messzelle in einem Faradaykäfig, dass mit der Erdverbindung des elektrochemischen Messsystems verbunden war. Zwischen den Messungen wurden die Bleche ebenfalls in einer 3 Gew.-% NaCl-Lösung gelagert. Die Temperatur im Labor lag bei 20 °C, die Luftfeuchtigkeit bei 30%.

Die Kapazität C der Beschichtung wurde anhand der gemessenen Impedanz $|Z|$ und Phasenwinkel $\varphi$ bei einer Frequenz $f$ von 10 kHz berechnet, wie beschrieben in Progress in Organic Coatings 2018 Vol. 124, S. 249 - 255. Folgende Gleichung wurde hierbei benutzt:

$$C = -\sin\varphi \,/2\pi f|Z|$$

Der Volumenanteil Wasser $\Phi_{V,wasser}$ in der Beschichtung zu einem Zeitpunkt $t$ wurde mit einer modifizierten Brasher-Kingsbury-Gleichung berechnet, wie ebenfalls beschrieben in Progress in Organic Coatings 2018 Vol. 124, S.249-255:

$$\phi_{v,wasser} = (log\,\varepsilon_w)^{-1}\big(1 - \phi_{v,sil}\big)log(C(t)d(0)/C(0)d(t))$$

mit der $\Phi_{V,sil}$ der Volumenanteil Siliziumdioxid in der Beschichtung, $\varepsilon_w$ die relative dielektrische Konstante von Wasser und $d(t)$ die Schichtdicke. Durch die Adsorption von Wasser ist die Schichtdicke nicht konstant, sondern nimmt mit der Zeit $t$ zu. Die Schichtdicke wurde unmittelbar vor jeder Impedanzmessung mit Hilfe eines Byko-test MPOR Schichtdickenmessgerät der Fa. Fischer gemessen, und zwar an gleicher Stelle. Als Schichtdicke wurde der Mittelwert von 6 Messungen genommen.

In unseren Berechnungen sind wir von einem Volumenanteil Silika von 1,0% und eine relative dielektrische Konstante von 80,1 (Quelle: CRC Handbook of Chemistry and Physics, 58.Ausgabe, Ed. Robert C. Weast, CRC Press, S. E-61) ausgegangen. C(0) ist die Kapazität zum Zeitpunkt t=0. Zur Berechnung von C(0) würde die Impedanz bei 10 kHz nach einer halben Stunde genommen.

Die ionische Leitfähigkeit einer Beschichtung kann ebenfalls mit Hilfe der Impedanzspektroskopie bestimmt werden. Wie in der DIN EN ISO 16773-4 beschrieben, kann das gemessene Impedanzspektrum mit einem Ersatzschaltkreis nach Randles angepasst werden. Dadurch erhält man den Ohm'schen Wiederstand $R_p$ der jeweiligen Beschichtung. Die Prozedur wurde mit Hilfe der Software Thales XT Version 5.3.0 durchgeführt. Der Ohm'sche Wiederstand wird multipliziert mit der Größe der gemessenen Oberfläche A und geteilt durch die Schichtdichte d zum jeweiligen Zeitpunkt, damit diese unabhängig wird von beiden. Die elektrische Leitfähigkeit κ des Beschichtungsmaterials ist dessen Inversion, wie folgend:

$$\kappa = \left(\frac{R_p A}{d}\right)^{-1}$$

Die gemessene Oberfläche A ist die innere Oberfläche des Plexiglas Zylinders, 8.93 cm$^2$.

**Salzsprühtest**

Salzsprühtests wurden mit einem Q-Fog Salzsprühkammer der Firma Q-Lab angelehnt an ASTM B117 durchgeführt. Die Beurteilung der Bleche erfolgte nach DIN EN ISO 4628 -2 (Blasenbildung), -3 (Rostbildung) und -4 (Rissbildung).

**Materialien und Geräte**

- Epikote® Resin 828, Fa. Hexion (Bisphenol A Diglycidylether Oligomer)
- Aerosil® 200, Fa. Evonik Industries
- Aerosil® R972, Fa. Evonik Industries
- Aerosil® R974, Fa. Evonik Industries
- Aradur® 450 BD, Fa. Huntsman (Polyamidoamine Härter)
- Zn-Staub super extra, Fa. EverZinc
- n-Butylacetat, Firma Reininghaus Chemie
- Natriumchlorid BioXtra, ≥99.5%, Fa. Sigma Aldrich
- IM6 elektrochemisches Messsystem, Fa. ZAHNER-Elektrik
- AMZ-60 Messzelle, Fa. ZAHNER-Elektrik
- MF-2052 RE-5B Referenzelektrode, Fa. BASi
- Aluminiumbleche, 3" x 6", Fa. Q-Lab
- Q-Fog Salzsprühkammer, Fa. Q-Lab
- Byko-test MPOR Schichtdickenmessgerät, Fa. Fischer

**Beispiele**

**1. Herstellung von ausgehärteten Beschichtungen auf Basis von epoxyfunktionellen Polymeren als Bindemittel**

In einem 180 mL PE-Becher wurden gemäß den Angaben aus Tabelle 1 (die Mengenangaben sind in Gewichtsteilen aufgeführt) zuerst das Epoxidharz Epikote® 828 vorlegt. Anschließend wurde n-Butylacetat unter Rühren bei 2,000 UpM mit einem Dispermaten der Firma VMA Getzmann hinzugefügt und für weitere 3 Minuten bei 2,000 UpM homogenisiert. Danach wurde Aerosil zugegeben und ebenfalls für 3 Minuten bei 2,000 UpM homogenisiert. Abschließend wurde Aradur® 450 BD unter Rühren bei 2,000 UpM zugegeben, und 3 Minuten bei 2,000 UpM homogenisiert.

Die erfindungsgemäßen Beschichtungszusammensetzungen B1 - B3 sowie das Vergleichsbeispiel ohne Siliziumdioxid VB wurden sofort nach Herstellung mit Hilfe eine 100 μm Spiralrakels auf jeweils drei Stahl-Bleche der Firma Q-Labs appliziert. Die insgesamt 12 Bleche wurden anschließend 7 Tagen bei Raumtemperatur ausgehärtet. Die Schichtdicke lag bei ca. 70 μm.

**Tabelle 1: Zusammensetzung der ausgehärteten Beschichtungen auf Basis von epoxyfunktionellen Polymeren.**

|  | VB | B1 | B2 | B3 |
|---|---|---|---|---|
| Epikote® 828 | 80 | 80 | 80 | 80 |
| Aerosil® 200 | - | 2 | - | - |
| Aerosil® R972 | - | - | 2 | - |
| Aerosil® R974 | - | - | - | 2 |
| n-Butylacetat | 18 | 18 | 18 | 18 |
| Aradur® 450 BD | 49,4 | 49,4 | 49,4 | 49,4 |

### 2. Bestimmung der Wasseraufnahme

Das Impedanzspektrum der applizierten Bleche B1 - B3 sowie VB wurden, wie oben beschrieben, gemessen. Der Volumenanteil Wasser $\Phi_{v,wasser}$ in der ausgehärteten Beschichtungen zu den genannten Zeitpunkten $t$ wurde gemäß o.g. Formel berechnet.

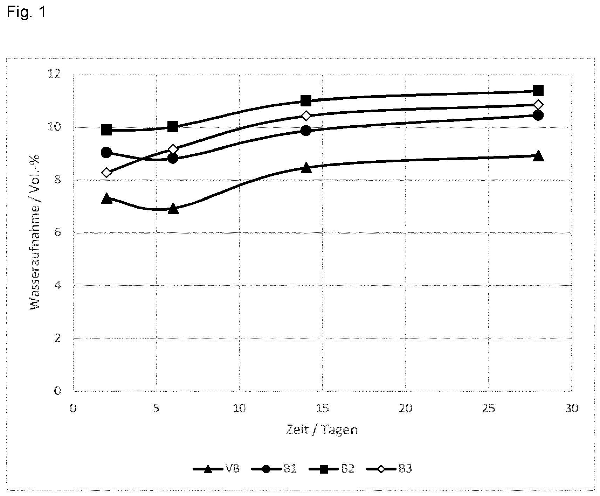

Das Ergebnis ist in Fig.1 dargestellt. Die Werte sind Mittelwerte von 3 verschiedenen Blechen, die alle insgesamt dreimal gemessen wurden. Es konnte gezeigt werden, dass die Zugabe von Siliziumdioxid zu einer Erhöhung der Wasseraufnahme führt. Das Vergleichsbeispiel weist nur einen geringeren Wasseranteil auf.

### 3. Bestimmung der Leitfähigkeit

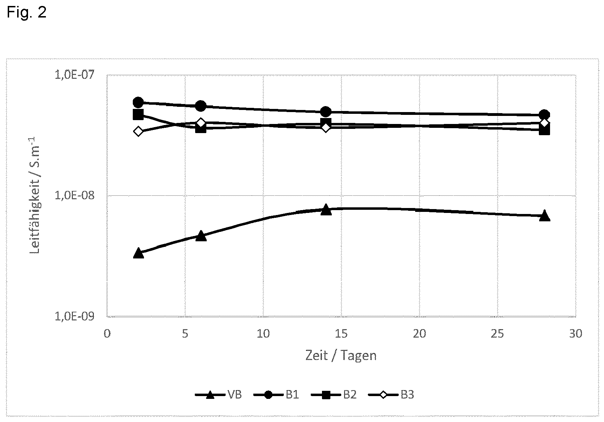

Aus dem Impedanzspektrum der applizierten Bleche B1 - B3 sowie VB wurde deren Leitfähigkeit gemäß o.g. Formel berechnet. Das Ergebnis ist in Fig. 2 dargestellt. Die Zahlen sind Mittelwerte von 3 Blechen, die alle insgesamt dreimal gemessen wurden. Durch die Zugabe von Siliziumdioxid konnte festgestellt werden, dass die erfindungsgemäßen Beschichtungen eine erhöhte ionische Leitfähigkeit aufweisen, im Gegensatz zu einer Beschichtung ohne Siliziumdioxid (VB)

### 4. Herstellung von erfindungsgemäßen Zinkprimer

Die erfindungsgemäßen Zinkprimer ZP1 - ZP3 wurden gemäß den Angaben aus Tabelle 2 (die Mengenangaben sind in Gewichtsteilen aufgeführt) hergestellt, mit der Maßgabe, dass der Zinkstaub zusammen mit dem Aerosil zu dem mit Butylacetat verdünnten Epikote® 828 gegeben und für 3 Minuten bei 2,000 UpM homogenisiert wurde. Abschließend wurde Aradur® 450 BD unter Rühren bei 2,000 UpM zugegeben, und 3 Minuten bei 2,000 UpM homogenisiert.

**Tabelle 2: Zusammensetzung der Zinkprimer. Alle Angaben in Gewichtsteilen.**

| Zinkprimer | VZP | ZP1 | ZP2 | ZP3 |
|---|---|---|---|---|
| Epikote® 828 | 17 | 17 | 17 | 17 |
| Aerosil® 200 | - | 2 | - | - |
| Aerosil® R972 | - | - | 2 | - |
| Aerosil® R974 | - | - | - | 2 |
| n-Butylacetat | 16 | 16 | 16 | 16 |
| Aradur® 450 BD | 10,5 | 10,5 | 10,5 | 10,5 |
| Zinkstaub | 65 | 65 | 65 | 65 |

Die erfindungsgemäßen Zinkprimer ZP1 - ZP3 sowie das Vergleichsbeispiel ohne Siliziumdioxid VZP wurden sofort nach Herstellung mit Hilfe eine 100 μm Spiralrakels auf jeweils zwei Stahl-Bleche der Firma Q-Labs appliziert. Die insgesamt 8 Bleche wurden anschließend 7 Tagen bei Raumtemperatur ausgehärtet.

**5. Salzsprühtest**

Es wurden jeweils zwei Bleche mit dem applizierten Zinkprimer VZP, ZP1 - ZP3 aus Beispiel 2 untersucht. Diese wurden für 1500 Stunden im Salzsprühkammer bewittert. Das Ergebnis entspricht den Mittelwert der beiden Bleche. Blasengrad und -größe, Rostgrad und Rissgrad wurden nach DIN EN ISO 4628 beurteilt und in Tabelle 3 dargestellt.

Es zeigt sich, dass die Zunahme des Wassergehaltes und die Erhöhung der Leitfähigkeit durch die Zugabe von Siliziumdioxid mit reduzierter Blasen-, Rost- und Rissbildung einher geht. Durch die Verwendung von Siliziumdioxid konnte gezeigt werden, dass der kathodische Korrosionsschutz des Zinkprimers verbessert wurde.

**Tabelle 3: Bewertung des Salzsprühtests**

| Primer | VZP | ZP1 | ZP2 | ZP3 |
|---|---|---|---|---|
| Blasengrad | 5 (S5) | 3 (S2) | 3 (S2) | 3 (S2) |
| Rostgrad | 3 | 1 | 1 | 1 |
| Rissgrad | 1 | 0 | 0 | 0 |

**Patentansprüche**

1. Verwendung von Siliziumdioxid zur Erhöhung der ionischen Leitfähigkeit von ausgehärteten Beschichtungen auf Basis von epoxyfunktionellen Polymeren als Bindemittel, wobei die Verwendung den kathodischen Korrosionsschutz von Funktionsbeschichtungen auf Basis von epoxyfunktionellen Polymeren und von mindestens einem Metallteilchen verbessert.

2. Verwendung nach Anspruch 1, **dadurch gekennzeichnet, dass** es sich bei dem Siliziumdioxid um pyrogenes Siliziumdioxid handelt, vorzugsweise ausgewählt aus hydrophilen, hydrophoben und/oder teilhydrophoben, pyrogenen Siliziumdioxiden.

3. Verwendung nach einem der vorgenannten Ansprüche, **dadurch gekennzeichnet, dass** das Siliziumdioxid, vorzugsweise Siliziumdioxidpartikel, eine Oberflächenmodifizierung mit Silanen ausgewählt aus Dimethyldichlorsilan, Trimethoxy-*i*-Butylsilan, Trimethoxyoctylsilan, Trimethoxyhexadecylsilan, Octyltriethoxysilan, Silazanen ausgewählt aus 1,1,1-Trimethyl-N-trimethylsilyl-silanamin und N-Methyl-aza-2,2,4-trimethylsilacyclopentane oder Siloxanen ausgewählt aus Octamethyltetracyclosiloxan, Decamethylpentacyclosiloxan oder Polydimethylsiloxan, oder Kombinationen daraus, aufweist.

4. Verwendung nach einem der vorgenannten Ansprüche, **dadurch gekennzeichnet, dass** die pyrogene Siliziumdioxidpartikeln eine BET-Oberfläche von 20 m$^2$/g - 1000 m$^2$/g, bevorzugt 50 m$^2$/g - 500 m$^2$/g, bestimmt nach DIN 9277:2014 durch Stickstoffadsorption nach dem Brunauer-Emmett-Teller-Verfahren, aufweist.

5. Verwendung nach einem der vorgenannten Ansprüche, **dadurch gekennzeichnet, dass** das Siliziumdioxid in einer Menge von 0,01 - 15 Gew.-%, bevorzugt 0,05 - 5 Gew.-%, besonders bevorzugt 0,1 - 3 Gew.-% bezogen auf die Gesamtmenge der Funktionsbeschichtung verwendet wird.

6. Verwendung nach einem der vorgenannten Ansprüche, **dadurch gekennzeichnet, dass** die Metallteilchen ausgewählt ist aus Zink, Magnesium, Aluminium, Chromium, Silizium oder Mangan, deren Legierungen oder Mischungen davon.

7. Verwendung nach einem der vorgenannten Ansprüche, **dadurch gekennzeichnet, dass** es sich bei der Funktionsbeschichtung um einer Grundierungsbeschichtung, vorzugsweise einen Zinkprimer, handelt.

8. Verwendung nach einem der vorgenannten Ansprüche, **dadurch gekennzeichnet, dass** der Zinkprimer Zinkstaub oder Zinkflakes enthält.

9. Verwendung nach einem der vorgenannten Ansprüche, **dadurch gekennzeichnet, dass** der Zinkprimer ein Bindermittelsystem auf Basis eines Epoxidharzes aufweist, ausgewählt aus Bisphenol A Glycidylether, Bisphenol F Glycidylether, Novolac basierten Epoxidharzen oder Gemische daraus.

10. Verwendung nach einem der vorgenannten Ansprüche, **dadurch gekennzeichnet, dass** die Funktionsbeschichtung einen Härter bevorzugt ausgewählt aus der Gruppe der aliphatischen, cycloaliphatischen und aromatischen Aminen, und darauf basierten Polyamiden oder Amidoaminen aufweist.

Fig. 1

Fig. 2

**Europäisches Patentamt**
**European Patent Office**
**Office européen des brevets**

# EUROPÄISCHER RECHERCHENBERICHT

**Nummer der Anmeldung**

EP 20 19 0611

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 110 172 288 A (CHANGSHA PUZHAO BIO ENGINEERING TECH CO LTD) 27. August 2019 (2019-08-27) | 1,2 | INV. C09D5/08 C09D5/10 C09D163/00 |
| Y | * Absatz [0068] - Absatz [0118]; Ansprüche 1-3 * | 3-10 | |
| X | KR 2014 0005476 A (KCC CORP [KR]) 15. Januar 2014 (2014-01-15) | 1,3,6 | |
| Y | * Ansprüche 1,10,11 * | 2-10 | |
| Y | LU H B ET AL: "Synthesis and characterization of silica-acrylic-epoxy hybrid coatings on 430 stainless steel", SURFACE AND COATINGS TECHNOLOGY, ELSEVIER BV, AMSTERDAM, NL, Bd. 204, Nr. 1-2, 25. September 2009 (2009-09-25), Seiten 91-98, XP026458191, ISSN: 0257-8972 [gefunden am 2009-07-03] * Abbildung 1; Tabelle 1 * | 1-10 | |
| Y | Z Ranjbar ET AL: "Effects of Nano Silica on the Anticorrosive Properties of Epoxy Coatings", , 1. Januar 2013 (2013-01-01), Seiten 119-128, XP55770559, Gefunden im Internet: URL:http://pccc.icrc.ac.ir/article_75810_d2bacf73d4926316ca932322bbc562ef.pdf * das ganze Dokument * | 1-10 | **RECHERCHIERTE SACHGEBIETE (IPC)** C09D C09G C09J |

Der vorliegende Recherchenbericht wurde für alle Patentansprüche erstellt

| Recherchenort | Abschlußdatum der Recherche | Prüfer |
|---|---|---|
| München | 1. Februar 2021 | Friedrich, Christof |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 0611

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2021

| Im Recherchenbericht angeführtes Patentdokument | Datum der Veröffentlichung | Mitglied(er) der Patentfamilie | Datum der Veröffentlichung |
|---|---|---|---|
| CN 110172288 A | 27-08-2019 | KEINE | |
| KR 20140005476 A | 15-01-2014 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011076518 A1

**In der Beschreibung aufgeführte Nicht-Patentliteratur**

- *Progress in Organic Coatings,* 2018, vol. 124, 249-255

- Quelle: CRC Handbook of Chemistry and Physics. CRC Press, E-61